# EUROPÄISCHE PATENTSCHRIFT

(11) **EP 3 339 888 B1**
(45) Veröffentlichungstag und Bekanntmachung des Hinweises auf die Patenterteilung: **27.02.2019**
(21) Anmeldenummer: 16206063.6
(22) Anmeldetag: 22.12.2016
(51) Int. Cl.: G06K 7/14, G01J 1/42, G01S 7/486, G01J 1/44, G01S 17/89, G01S 7/497

(54) **LICHTEMPFÄNGER MIT EINER VIELZAHL VON LAWINENPHOTODIODENELEMENTEN IM GEIGER-MODUS UND VERFAHREN ZUR TEMPERATURKOMPENSATION**
LIGHT RECEIVING DEVICE WITH A PLURALITY OF AVALANCHE PHOTO DIODE ELEMENTS IN GEIGER MODE AND METHOD FOR TEMPERATURE COMPENSATION
RÉCEPTEUR DE LUMIÈRE COMPRENANT UNE PLURALITÉ D'ÉLÉMENTS À PHOTODIODE À AVALANCHE EN MODE GEIGER ET PROCÉDÉ DE COMPENSATION DE TEMPÉRATURE

(43) Veröffentlichungstag der Anmeldung: 27.06.2018
(73) Patentinhaber: Sick AG, 79183 Waldkirch (DE)
(72) Erfinder: Marra, Martin, 79117 Freiburg (DE); Seitz, Stefan, 79341 Kenzingen (DE)

(56) Entgegenhaltungen:
- EP-A1- 3 091 272
- DE-U1-202013 105 389
- Rev Analog Devices: "Avalanche Photodiode Bias Controller and Wide Range (5 nA to 5 mA) Current Monitor ADL5317", , 1. Januar 2005 (2005-01-01), XP055403823, Gefunden im Internet: URL:http://www.analog.com/media/en/technic al-documentation/data-sheets/ADL5317.pdf [gefunden am 2017-09-05]

## Beschreibung

Die Erfindung betrifft einen Lichtempfänger mit einer Vielzahl von Lawinenphotodiodenelementen im Geiger-Modus und ein Verfahren zur Temperaturkompensation nach dem Oberbegriff von Anspruch 1 beziehungsweise 13.

Ein Lichtempfänger hat die Funktion, aus einfallendem Empfangslicht ein elektrisches Signal zu erzeugen. Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung (Breakdownvoltage) vorgespannt (Bias), so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPADs (Single-Photon Avalanche Diode) bezeichnet.

Die hohe Strahlungsempfindlichkeit von SPADs wird in vielen Anwendungen genutzt. Dazu zählen die Medizintechnik mit CT, MRT oder Blutanalysen, die optische Messtechnik einschließlich Spektroskopie, Entfernungsmessung und dreidimensionaler Bildgebung, die Strahlendetektion in der Kernphysik oder die Verwendungen in Teleskopen für die Astrophysik.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 5 bis 100 ns unempfindlich und fällt solange für weitere Messungen aus. Deshalb ist es üblich, mehrere SPADs zusammenzuschalten und statistisch auszuwerten.

Die Durchbruchspannung ist die minimale benötigte Vorspannung zur Aufrechterhaltung des gewünschten Geiger-Modus für ein SPAD. Genaugenommen ist jedoch bei diesem Grenzwert die Detektions-Effizienz wie die Verstärkung immer noch Null. Erst wenn die Vorspannung die Durchbruchspannung übersteigt, werden einfallende Photonen in entsprechende Geigerstromimpulse umgesetzt. Bei einer idealen Photonen-Detektions-Effizienz (PDE) von 100% würde jedes einfallende Photon einen Geigerstromimpuls auslösen. Praktisch gelingt das nicht vollständig. Die PDE kann jedoch über die Höhe der angelegten Vorspannung beeinflusst werden.

Um den Arbeitspunkt der SPADs und entsprechend auch deren Auslöseempfindlichkeit über eine von außen bereitgestellte Vorspannung einzustellen, werden die anoden- und kathodenseitigen Anschlüsse der einzelnen SPAD-Zellen des Lichtempfängers direkt herausgeführt. Anstelle der Vorspannung wird meist nur die Überspannung, also die Differenz aus Vorspannung und Durchbruchspannung betrachtet. Die Auslösewahrscheinlichkeit steigt mit der Überspannung. Dabei gibt es in der Praxis eine sinnvolle obere Grenze, weil die Auslösewahrscheinlichkeit bei höheren Überspannungen in Begrenzung geht und unerwünschte Rauschanteile überproportional mit ansteigen.

Die Höhe der Durchbruchspannung wird physikalisch durch den PN-Übergang des verwendeten Halbleiterprozesses bestimmt. Deshalb unterliegt die Durchbruchspannung einer SPAD einer entsprechenden Temperaturabhängigkeit. Beispielsweise liegt die Durchbruchspannung bei Raumtemperatur bei etwa 28 V und der dazugehörende Temperaturkoeffizient in einer Größenordnung 20-30 mV/K. Ein typischer Wert für die Überspannung beträgt je nach gewähltem Arbeitspunkt beziehungsweise gewünschter Auslösewahrscheinlichkeit 0,5-6 V, wobei Temperatureinflüsse auf die Überspannung selbst als vernachlässigbare Große angesehen werden können. Ein industrieller Sensor kann durch Eigenerwärmung und unterschiedliche Umgebungstemperaturen durchaus Betriebstemperaturschwankungen von 60-100 K unterliegen. Folglich muss mit Schwankungen der Überspannung von einigen Volt gerechnet werden, die den Arbeitspunkt ganz erheblich verschieben.

Soll daher die Empfindlichkeit des Lichtempfängers bei veränderlicher Betriebstemperatur konstant gehalten werden, so muss eine Kompensation erfolgen. Herkömmlich wird dazu ein separater Temperaturfühler außerhalb des Lichtempfängers eingesetzt, der an dem Lichtempfänger angeordnet und dabei möglichst gut thermisch angekoppelt wird. Die Temperaturinformation wird dazu verwendet, die angelegte Vorspannung entsprechend nachzuführen. Nachteilig sind hieran nicht nur der erhöhte Platzbedarf und die höheren Herstellkosten durch zusätzliche Bauteile, um die Temperatur zu bestimmen, daraus die benötigte Anpassung abzuleiten und die Vorspannung nachzuführen. Der herkömmliche Temperaturfühler erfasst auch die relevante Betriebstemperatur der SPADs unzureichend. Dazu tragen geometrische Gegebenheiten, thermische Übergangswiderstände und Koppelpfade zu den SPADs und benachbarten Komponenten und gerade bei schnell wechselnden Temperaturen oder thermischem Einschwingen zeitliche Verzögerungen und Ungenauigkeiten durch unterschiedliche thermische Trägheit der Komponenten bei.

Die WO 2011/117309 A2 schlägt vor, neben der Anode und Kathode für das Anlegen der Vorspannung eine dritte Elektrode an dem SPAD-Detektor vorzusehen, über welche der Geigerstrom kapazitiv ausgekoppelt wird. Dadurch soll verhindert werden, dass das Auslesen durch Schaltelemente der Vorspannung verzögert wird. Mit einer Temperaturkompensation befasst sich das Dokument aber nicht.

Die DE 20 2013 105 389 U1 beschreibt einen optoelektronischen Sensor mit im Geiger-Modus betriebenen Lawinenphotodiodenelementen. Der Sensor umfasst in einigen Ausführungsformen ein Temperaturmesselement, das mit weiteren Funktionselementen wie dem Lichtempfänger oder der Auswertungseinheit Teil derselben integrierten Schaltung sein kann. Dadurch wird eine Temperaturkompensation beispielsweise der Versorgungsspannung ermöglicht.

Aus der EP 3 091 272 A1 ist ein Lichtgitter mit SPAD-Lichtempfängern bekannt. Dabei wird auch vorgeschlagen, eine Temperaturregellogik zusammen mit dem Lichtempfänger auf einem Chip zu integrieren. Damit wird die Vorspannung der einzelnen SPADs temperaturabhängig geregelt, um sie im Arbeitsbereich des Geigermodus' zu halten.

Der Versorgungs- und Überwachungsbaustein ADL5317 für APDs weist gemäß Dokumentation "Avalanche Photodiode Bias Controller and Wide Range (5 nA to 5 ma) Current Monitor ADL5317", XP055403823 einen Überstromschutz auf. Dadurch fällt die Vorspannung bei Überschreiten einer Stromschwelle stark ab.

Es ist daher Aufgabe der Erfindung, für eine verlässlichere Funktion eines Lichtempfängers mit SPADs zu sorgen.

Diese Aufgabe wird durch einen Lichtempfänger mit einer Vielzahl von Lawinenphotodiodenelementen im Geiger-Modus und ein Verfahren zur Temperaturkompensation nach Anspruch 1 beziehungsweise 13 gelöst. Der Lichtempfänger weist jeweils einen anoden- und kathodenseitigen Anschluss auf, um eine extern bereitgestellte Vorspannung anzulegen, die im Lichtempfänger an die Lawinenphotodiodenelemente geführt wird. Wenn diese Vorspannung über der Durchbruchspannung liegt, arbeiten die Lawinenphotodiodenelemente im Geiger-Modus, wobei die Überspannung, also ein die Durchbruchspannung übersteigender Anteil der Vorspannung, den Arbeitspunkt und insbesondere die Auslösewahrscheinlichkeit festlegt. Die Erfindung geht nun von dem Grundgedanken aus, dass der Lichtempfänger selbst die Vorspannung an seine Betriebstemperatur anpasst. Dafür ist ein Temperaturerfassungselement vorgesehen, das die Betriebstemperatur bestimmt, wobei die Messung nicht notwendig in einer üblichen Einheit wie °C oder K erfolgt, sondern beispielsweise auch eine temperaturabhängige Rohinformation wie eine Spannung oder ein Strom in dem Temperaturerfassungselement sein kann. Eine Spannungskompensationseinheit passt die Vorspannung dann entsprechend der Messinformation des Temperaturerfassungselements an.

Die Erfindung hat den Vorteil, dass der Lichtempfänger bereits in sich temperaturkompensiert ist. Die Temperaturabhängigkeit muss folglich in einem Gerät, in dem der Lichtempfänger eingesetzt ist, bei dessen Beschaltung oder dergleichen gar nicht weiter beachtet werden. Externe Schaltungs- oder Steuerungsaufwände entfallen. Die Temperaturkompensation hat in einem Gerät und auch innerhalb des Lichtempfängers keinen relevanten Platzbedarf. Es wird eine besonders genaue Anpassung an Schwankungen der Betriebstemperatur erreicht, die zu einer geringeren Störbeeinflussbarkeit, einem Schutz vor Zerstörung und einem optimierten Nutzsignal führt.

Die Spannungskompensationseinheit ist bevorzugt dafür ausgebildet, eine an den Lichtempfänger angelegte Vorspannung in Abhängigkeit von der Betriebstemperatur zu verändern. Somit kann von außen eine konstante Vorspannung angelegt werden. Die Spannungskompensationseinheit passt diese äußere, konstante Vorspannung um eine Differenzspannung an, die von der gemessenen Betriebstemperatur abhängt.

Die Spannungskompensationseinheit ist bevorzugt spannungsabziehend ausgebildet. Dementsprechend wird vorzugsweise von außen eine konstante Vorspannung an den Lichtempfänger angelegt, die zu hoch ist beziehungsweise der höchsten benötigten Vorspannung entspricht, beispielsweise für eine höchste denkbare Betriebstemperatur ausgelegt ist. Schaltungstechnisch ist es besonders einfach, wenn die Kompensation stets durch Spannungsabzug erfolgt. Möglich wäre aber auch alternativ, wenn man den erhöhten Aufwand in Kauf nimmt, eine positive Kompensation, welche die von außen angelegte Vorspannung in Abhängigkeit von der gemessenen Betriebstemperatur anhebt etwa durch eine Ladungspumpe.

Das Temperaturerfassungselement ist bevorzugt auf dem Lichtempfänger integriert. Das vereinfacht die Herstellung eines Geräts, in dem der Lichtempfänger eingesetzt ist, weil kein zusätzliches Bauteil samt mechanischer, thermischer und elektronischer Anbindung benötigt wird. Außerdem ist die direkt auf dem Lichtempfänger gemessene Temperatur genauer, weil das Temperaturerfassungselement sich in unmittelbarer Nachbarschaft zu den Lawinenphotodiodenelementen befindet und den gleichen thermischen Einflüssen unterliegt. Das Temperaturerfassungselement entsteht insbesondere im selben Halbleiterprozess mit den Lawinenphotodiodenelementen. Dadurch wird die Herstellung weiter vereinfacht. Durch Integration der Temperaturkompensation auf dem Lichtempfänger kann bereits während des Halbleiter-Herstellungsprozesses ein Abgleich durchgeführt werden. Hier wird die Stärke der Temperaturkompensation optimal auf die Serienstreuung des Temperaturkoeffizienten getrimmt. Es ist im Übrigen als Alternative zu einer Spannungskompensationseinheit des Lichtempfängers auch denkbar, nur das Temperaturerfassungselement auf dem Lichtempfänger zu integrieren und die Vorspannung durch externe Beschaltung anzupassen.

Das Temperaturerfassungselement umfasst bevorzugt mindestens eines der Lawinenphotodiodenelemente. Damit wird direkt dieselbe Temperaturabhängigkeit für die Bestimmung der Betriebstemperatur genutzt, die dann kompensiert wird. Ein Lawinenphotodiodenelement, das die Temperatur misst, ist vorzugsweise blind, was zumindest bedeutet, dass dessen Signal nicht zum Nutzsignal des Lichtempfängers beiträgt und auch bedeuten kann, dass ein solches Lawinenphotodiodenelement optisch abgeschirmt und möglicherweise auch elektrisch isoliert wird. Ansonsten könnte die eigene Aktivität die Temperaturmessung verfälschen. Alternativ dazu, ein Lawinenphotodiodenelement als Temperaturerfassungselement zu nutzen, kann dafür auf dem Lichtempfänger ein beliebiger vorhandener oder zusätzlicher PN-Übergang genutzt werden.

Die Spannungskompensationseinheit ist bevorzugt dafür ausgebildet, die Vorspannung entsprechend einer erfassten Spannungsänderung an dem Temperaturerfassungselement nachzuführen. Damit wird der Umweg einer Umrechnung der Messinformation des Temperaturerfassungselements auf eine Temperatur in üblichen Einheiten vermieden. Im einfachsten Fall wirkt die Spannungskompensationseinheit wie ein Linearregler und überträgt somit die an dem Temperaturerfassungselement gemessenen Spannungsänderungen direkt auf die Vorspannung. Es ist aber auch möglich, sich an eine beliebige Kennlinie des Temperaturerfassungselements anzupassen, also die dort gemessene Spannungsänderung invertiert, gedämpft, verstärkt und/oder nichtlinear auf die Vorspannung zu übertragen.

Temperaturerfassungselement und Spannungskompensationseinheit sind bevorzugt als gemeinsames Schaltelement ausgebildet. Das führt zu einer besonders einfachen und übersichtlichen Anordnung. Die Temperaturkompensation ist an einer einzigen Stelle zusammengefasst.

Das gemeinsame Schaltelement weist bevorzugt mindestens eine Halbleiterstrecke auf, insbesondere eine Diodenstrecke. Das ist eine sehr einfache Implementierung der Idee einer Temperaturerfassung und Spannungskompensation in einem. Dabei entsteht eine Kaskade von PN-Übergängen, deren Temperaturverhalten durch passende Wahl von Temperaturkoeffizient und Anzahl gerade die Schwankungen der Betriebstemperatur kompensiert.

Das Temperaturerfassungselement ist bevorzugt dafür ausgebildet, die Betriebstemperatur an mehreren Positionen auf dem Lichtempfänger zu messen. Dazu wird insbesondere ein mehrteiliges Temperaturerfassungselement eingesetzt, beispielsweise mehrere PN-Übergänge oder mehrere zur Temperaturerfassung verwendete Lawinenphotodiodenelemente. Dies sollte in einigem Abstand untereinander oder allgemein einer geeigneten geometrischen Verteilung erfolgen, um die Temperaturverteilung auf dem Lichtempfänger gut abzubilden.

Die Spannungskompensationseinheit passt vorzugsweise die Vorspannung entsprechend einer über die mehreren Positionen gemittelten Betriebstemperatur an. Die Mittelung kann auch gewichtet sein und stellt sicher, dass die gemessene Betriebstemperatur auch repräsentativ ist und nicht zufällig nur einem besonders heißen oder kühlen Punkt entspricht. Insgesamt resultiert eine genauere Temperaturkompensation.

Die Spannungskompensationseinheit ist bevorzugt mehrkanalig ausgebildet, um die Vorspannung für verschiedene Gruppen von Lawinenphotodiodenelementen entsprechend einer lokal unterschiedlichen gemessenen Betriebstemperatur anzupassen. Unter dem Begriff mehrkanalig werden auch mehrere Spanungskompensationseinheiten verstanden. Damit kann die Vorspannung auch dann optimal angepasst werden, wenn die Betriebstemperatur über den Lichtempfänger nicht gleich ist. Es ist denkbar, dass die Temperatur an mehr Positionen gemessen wird als Kanäle für unterschiedliche Kompensationen der Vorspannung zur Verfügung stehen, indem jeweils einige Messungen durch Mittelung zusammengefasst werden.

Der Lichtempfänger weist bevorzugt eine aktive Strombegrenzungseinheit auf, die bei Überschreiten einer Stromschwelle des in dem Lichtempfänger fließenden Stroms die Vorspannung absenkt. Die Strombegrenzung ist vorzugsweise in den Lichtempfänger integriert und schützt ihn vor Beschädigung. Außerdem stellt die Strombegrenzung einen wichtiger Parameter zu Optimierung des Signal-Rausch-Verhältnisses dar. Die Hauptrauschquelle eines Lichtempfängers mit Lawinenphotodiodenelementen im Geiger-Modus ist ein Schrotrauschen, das sich aus Dunkelstromrauschen und Fremdlichtrauschen zusammensetzt. Es ist vorteilhaft, einen Maximalstrom festzulegen, da der Dunkelstrom sich alle 7-10°K verdoppelt und die Temperatur stark von der Fremdlichtmenge abhängt. Die konkrete optimale Stromgrenze ist an das jeweilige optische, mechanische und elektronische Design geknüpft. Bei Überschreiten der Grenze wird zunächst das Signal-Rausch-Verhältnis schlechter, und erst bei noch größeren Strömen gibt es die Gefahr der Bauteilbeschädigung.

Die Spannungskompensationseinheit fungiert bevorzugt auch als Strombegrenzungseinheit. Der in dem Lichtempfänger fließende Strom hängt von der Vorspannung ab. Somit sind über die Spannungskompensationseinheit ohnehin schon Mittel vorhanden, um den Strom zu begrenzen. Durch ihre Doppelfunktion schafft die Spannungskompensationseinheit dies praktisch ohne zusätzlichen Aufwand. Vorzugsweise passt die Spannungskompensationseinheit die Stromschwelle an die Betriebstemperatur an. Bei geringerer Betriebstemperatur hält der Lichtempfänger größere Ströme aus, ohne beschädigt zu werden. Da die Spannungskompensationseinheit ohnehin Zugriff auf die Betriebstemperatur hat, kann sie dies sehr einfach berücksichtigen und die Stromschwelle, ab welcher die Vorspannung zur Begrenzung des Stroms abgesenkt werden muss, daran anpassen.

In vorteilhafter Weiterbildung ist ein optoelektronischer Sensor mit mindestens einem erfindungsgemäßen Lichtempfänger vorgesehen, wobei der Sensor zur Entfernungsmessung nach einem Lichtlaufzeitverfahren und/oder als Codeleser und/oder zur Datenübertragung ausgebildet ist. Die Entfernung kann durch Triangulation bestimmt werden, wie in einem Triangulationstaster oder einer Stereokamera. Vorzugsweise erfolgt die Entfernungsmessung nach einem Lichtlaufzeitverfahren. In einem Pulslaufzeitverfahren wird mit einem Lichtsender ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Das Lichtlaufzeitverfahren kann in einem eindimensionalen Entfernungstaster, einem Laserscanner oder einem Bildsensor einer 3D-Kamera nach dem Lichtlaufzeitprinzip genutzt werden. Weitere nicht abschließende Anwendungen des Lichtempfängers in einem optoelektronischen Sensor sind Codelesen oder Datenübertragung oder Kombinationen dieser Anwendungen in einem Sensor.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit einem Lichtempfänger mit einer Vielzahl von Lawinenphotodiodenelementen im Geiger-Modus;
- Fig. 2: ein vereinfachtes Blockschaltbild eines Lawinenphotodiodenelements im Geiger-Modus;
- Fig. 3: ein schematisches Schaltbild einer Vielzahl von Lawinenphotodiodenelementen mit einer Spannungskompensation;
- Fig. 4: ein Schaltbild einer Ausführungsform der Spannungskompensation als Dioden kette;
- Fig. 5: ein Schaltbild einer Ausführungsform der Spannungskompensation mit einem Transistor und einem Spannungsteiler;
- Fig. 6: ein beispielhaftes Kennlinienbild der Spannungskompensation in Abhängigkeit von Strom und Temperatur;
- Fig. 7: eine alternative Kennlinie mit weichem Übergang zwischen Temperaturkompensation und Strombegrenzung; und
- Fig. 8: eine alternative Kennlinie, in der die Strombegrenzung bei Unterschreiten einer Spannungsschwelle rückläufig wird.

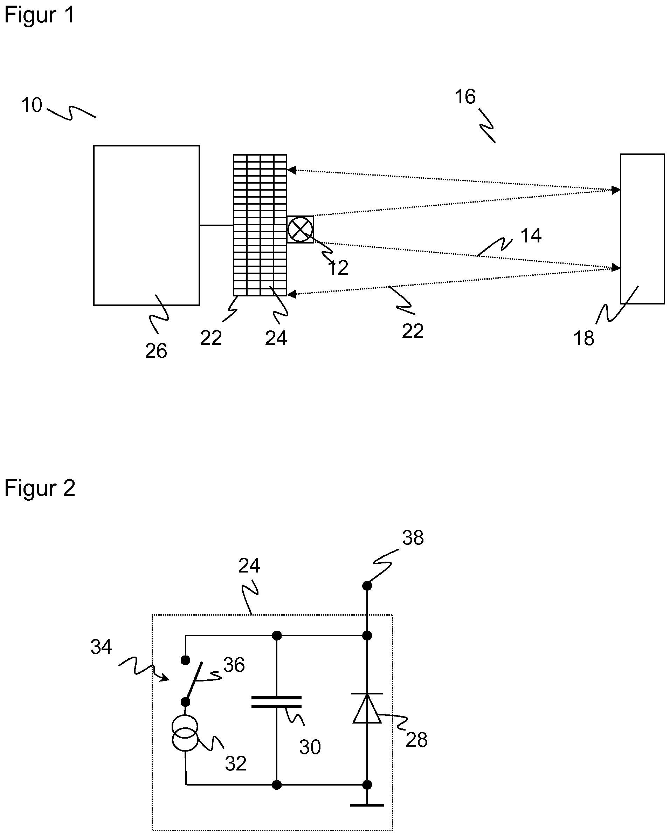

Figur 1 zeigt eine schematische Darstellung eines optoelektronischen Sensors 10 in einer Ausführungsform als einstrahliger Lichttaster. Ein Lichtsender 12, beispielsweise eine LED oder eine Laserlichtquelle, sendet ein Lichtsignal 14 in einen Überwachungsbereich 16 aus. Trifft es dort auf ein Objekt 18, so wird ein Teil des Lichtsignals remittiert oder reflektiert und kehrt als remittiertes Lichtsignal 20 zu einem Lichtempfänger 22 zurück. Dieser Lichtempfänger 22 umfasst eine Vielzahl von Lawinenphotodiodenelementen 24 im Geiger-Modus oder SPADs. Die Empfangssignale der Lawinenphotodiodenelemente 24 werden von einer Steuer- und Auswertungseinheit 26 ausgelesen und dort ausgewertet.

Der Sensor 10 weist in einer praktischen Ausführungsform weitere Elemente auf, insbesondere Sende- und Empfangsoptiken und Anschlüsse, auf die hier vereinfachend nicht eingegangen wird. Die Auftrennung in Lichtempfänger 22 und Steuer- und Auswertungseinheit 26 in Figur 1 ist auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodiodenelemente 24 und einzelnen oder Gruppen von Lawinenphotodiodenelementen 24 zugeordnete Schaltkreise zu deren Auswertung und Ansteuerung teilen. Außerdem ist die optische Anordnung mit einem Lichtsender 12, der einen kleinen Anteil des Lichtempfängers 22 verdeckt, rein beispielhaft. Alternativ sind auch andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Der Sensor 10 ist vorzugsweise entfernungsmessend. Dazu bestimmt die Steuer- und Auswertungseinheit 26 eine Lichtlaufzeit vom Aussenden des Lichtsignals 14 bis zum Empfang des remittierten Lichtsignals 20 und rechnet dies über die Lichtgeschwindigkeit in einen Abstand um.

Der dargestellte einstrahlige Sensor 10 ist nur als Beispiel zu verstehen. Eine Erweiterung des Überwachungsbereichs 16 ist durch Bewegen des Strahls in einem Laserscanner möglich, sei es durch einen Drehspiegel oder einen insgesamt drehenden Messkopf mit Lichtsender 12 und/oder Lichtempfänger 22. So können mehrere einstrahlige Systeme kombiniert werden, um ein Lichtgitter mit mehreren, meist parallelen Strahlen zu bilden, welches insbesondere als tastendes Lichtgitter in jedem Strahl Entfernungen misst oder überwacht. Es kann mit den Lawinenphotodiodenelementen 24 einzeln oder gruppenweise ortsaufgelöst gemessen werden, so dass eine 3D-Kamera entsteht. Auch mobile Systeme sind denkbar, bei denen der Sensor 10 beweglich montiert ist.

Figur 2 zeigt ein beispielhaftes vereinfachtes Ersatzschaltbild eines einzelnen Lawinenphotodiodenelements 24 im Geiger-Modus. In der Praxis handelt es sich um ein Halbleiterbauteil, dessen nicht dargestellter Aufbau hier als bekannt vorausgesetzt wird. Das Lawinenphotodiodenelement 24 zeigt zum einen das Verhalten einer Diode 28. Sie hat eine Kapazität, die durch einen parallel geschalteten Kondensator 30 repräsentiert wird. Der mögliche Lawinendurchbruch erzeugt Ladungsträger, deren Ursprung in dem Ersatzschaltbild als Stromquelle 32 dargestellt wird. Der Lawinendurchbruch wird durch ein auftreffendes Photon 34 ausgelöst, wobei dieser Vorgang wie ein Schalter 36 wirkt. Es gibt dann verschiedene Möglichkeiten, das Ausgangssignal 38 zu betrachten, auf die hier nicht näher eingegangen wird.

Im Bereitschaftszustand liegt über der Diode 28 eine Spannung oberhalb der Durchbruchspannung an. Erzeugt dann ein einfallendes Photon 34 ein Ladungsträgerpaar, so schließt dies gleichsam den Schalter 36, so dass das Lawinenphotodiodenelement 24 über die Stromquelle 32 mit Ladungsträgern geflutet wird. Neue Ladungsträger entstehen aber nur, solange das elektrische Feld stark genug bleibt. Wird durch die Stromquelle 32 der Kondensator 30 so weit entladen, dass die Durchbruchspannung unterschritten ist, so kommt die Lawine von selbst zum Erliegen ("passive quenching"). Danach lädt sich der Kondensator 30 wieder auf, bis wieder eine Spannung über der Durchbruchspannung an der Diode 28 anliegt. Es gibt alternative Ausgestaltungen, in denen die Lawine von außen erkannt und daraufhin eine Entladung unter die Durchbruchspannung ausgelöst wird ("active quenching"). Ein Lawinenphotodiodenelement 24 hat somit die Fähigkeit, sogar einzelne Photonen zu detektieren, und eignet sich daher für einen hochempfindlichen Lichtempfänger 22.

Je weiter die Vorspannung oberhalb der Durchbruchspannung liegt, umso stärker wird die Lawine, weil auf dem Kondensator 30 mehr Ladung verfügbar ist, ehe die Spannung unter die Durchbruchspannung fällt und die Lawine damit erlischt. Die Vorspannung beeinflusst demnach die Verstärkung. Änderungen der Vorspannung wirken sich außerdem auf den Quantenwirkungsgrad des Lawinenphotodiodenelements 24 aus, weil die Größe der sich ausbildenden Driftzone ebenfalls von der Höhe der Vorspannung abhängt. Das bedeutet, dass die Wahrscheinlichkeit einer Lawinenauslösung durch ein Einzelphoton 34 mit der Vorspannung steigt.

Die Vorspannung oder eine die Durchbruchspannung übersteigende Überspannung stellt demnach einen Arbeitspunkt des Lawinenphotodiodenelements 24 ein. Daher führen thermische Schwankungen der Vorspannung mit der Betriebstemperatur zu unerwünschten Verschiebungen, und es ist vorteilhaft, für eine Temperaturkompensation der Vorspannung zu sorgen.

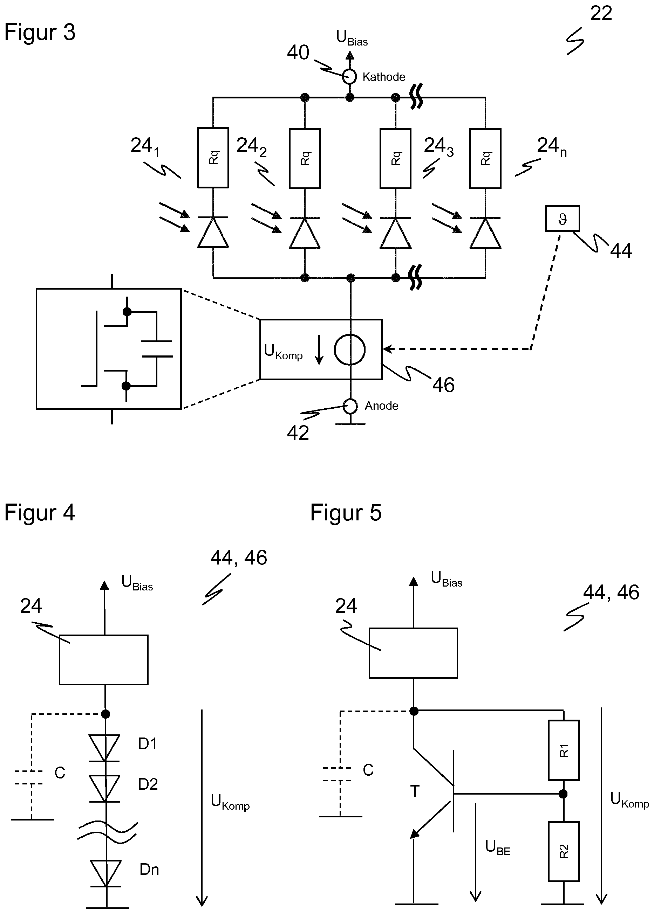

Figur 3 zeigt ein schematisches Schaltbild des Lichtempfängers 22 mit einer Vielzahl von Lawinenphotodiodenelementen 24₁...24ₙ, die jeweils vereinfachend als Reihenschaltung einer Diode und eines Löschwiderstands dargestellt sind. Die Vorspannung U_{Bias} wird an einen kathodenseitigen Anschluss 40 und einen anodenseitigen Anschluss 42 des Lichtempfängers 22 angelegt. Entsprechende Anschlüsse der einzelnen Lawinenphotodiodenelemente 24₁...24ₙ sind mit den Anschlüssen 40, 42 verbunden und somit die Lawinenphotodiodenelemente 24₁...24ₙ mit U_{Bias} vorgespannt. Die konkrete Ausgestaltung der Lawinenphotodiodenelemente 24₁...24ₙ ist rein beispielhaft und jede bekannte Implementierung von SPADs denkbar, insbesondere mit aktiver Löschung beziehungsweise einem dritten kapazitiv gekoppelten Anschluss zum Auslesen des Geigerstroms entsprechend der einleitend genannten WO 2011/117309 A2.

Um nun eine Temperaturkompensation in den Lichtempfänger 22 zu integrieren, ist eine Temperaturmesseinheit 44 vorgesehen, welche die Temperatur des Lichtempfängers 22 bestimmt. Die davon gemessene Temperaturinformation wird in einer Spannungskompensationseinheit 46 genutzt, um die an den Lawinenphotodiodenelementen 24₁...24ₙ anliegende Vorspannung temperaturunabhängig zu machen, sie also in Abhängigkeit von der Temperatur für eine temperaturunabhängige Empfindlichkeit nachzuführen.

Die Temperaturmesseinheit 44 ist vorzugsweise in den Halbleiterprozess des Lichtempfängers 22 integriert. Als eigentlicher Fühler kommt beispielsweise ein PN-Übergang auf dem Chip des Lichtempfängers in Frage, dessen Temperaturkoeffizient bekannt ist, so dass Spannungsschwankungen an dem PN-Übergang anhand des Temperaturkoeffizienten der Lawinenphotodiodenelemente 24₁...24ₙ dorthin übertragen werden können. Besonders vorteilhaft ist, eine oder mehrere der Lawinenphotodiodenelemente 24₁...24ₙ selbst als Temperaturmesseinheit 44 zu nutzen, denn deren Temperaturverhalten ist von vorneherein das gleiche wie dasjenige der übrigen Lawinenphotodiodenelemente 24₁...24ₙ. Ein temperaturmessendes Lawinenphotodiodenelement 24₁...24ₙ sollte vorzugsweise gezielt abgedunkelt werden, damit die Temperaturmessung nicht von der eigenen Aktivität bei Lichteinfall verfälscht wird.

Die Spannungskompensationseinheit 46 setzt die temperaturabhängige Spannungsinformation der Temperaturmesseinheit 44 in eine Anpassung der Vorspannung um. Wird ein Lawinenphotodiodenelement 24₁...24ₙ als Temperaturmesseinheit 44 genutzt, kann direkt deren Spannungswert übertragen werden. Alternativ sind aber auch erforderliche Modifikationen denkbar, wie eine Verstärkung, eine Invertierung und auch ein nichtlineares Verhalten. Dabei ist auch denkbar, dass die Temperaturmesseinheit 44 selbst noch keine Spannungsinformation liefert, sondern beispielsweise eine Temperatur in einer klassischen Einheit wie °C, K, die in der Spannungskompensationseinheit 46 umgerechnet wird.

Vorzugsweise bleibt die von außen angelegte Vorspannung U_{Bias} konstant, und die Spannungskompensationseinheit 46 erzeugt eine temperaturabhängige Kompensationsspannung U_{Komp}. Für eine besonders einfache Ausgestaltung ist die Spannungskompensationseinheit 46 ein spannungsabziehendes Element, beispielsweise ähnlich der Funktionsweise eines Linearreglers. Die von außen angelegte, konstante und somit temperaturunabhängige Vorspannung U_{Bias} wird entsprechend höher gewählt, um eine ausreichende Reserve für den temperaturabhängigen Spannungsabzug U_{Komp} vorzuhalten. Um die resultierenden Verluste gering zu halten, erzeugt die Spannungskompensationseinheit 46 möglichst geringe zusätzliche Spannungsabfälle und ist somit in der Lage, mit sehr geringen Restspannungen ("Drop Out Voltage") zu arbeiten. Prinzipiell ist alternativ zu einer rein spannungsabziehenden Kompensation auch eine Spannungserhöhung beispielsweise in Form einer Ladungspumpe vorstellbar.

Variationen der beispielhaft gezeigten Schaltung sind möglich. Beispielsweise kann die Spannungskompensationseinheit 46 im Kathodenpfad statt im Anodenpfad angeordnet sein, die Bezugspotentiale können umgekehrt werden, also die Kathode auf Massepotential und die Anode auf negative Vorspannung -U_{Bias} gelegt sein, und es kommen verschiedene Halbleiterprozesse wie Bipolar oder CMOS in Betracht.

Als eine Erweiterung kann die Temperaturmesseinheit 44 mehrere auf dem Lichtempfänger 22 verteilte Fühler aufweisen, um lokale Temperaturunterschiede zu berücksichtigen. Eine Variante mittelt dann die Temperaturen und bestimmt eine gemeinsame Spannungskompensation auf dieser Basis. Eine weitere Möglichkeit ist, verschiedene Gruppen von Lawinenphotodiodenelementen 24₁...24ₙ durch eine mehrkanalige Spannungskompensationseinheit 46 unterschiedlich entsprechend der lokalen Temperatur zu kompensieren.

Es ist denkbar, die Stärke der Temperaturkompensation von außen zu beeinflussen, sie insbesondere an- und abzuschalten. Dazu sind externe Komponenten wie ein Widerstand oder ein digitaler Weg etwa durch einen Parameter-Registerinhalt des Lichtempfängers 22 vorstellbar. Es ist auch möglich, die Temperaturinformation beispielsweise als analoges oder digitales Signal auf einem PIN-Anschluss oder über einen Registerzugriff extern zur Verfügung zu stellen.

Figur 4 zeigt ein Schaltbild einer Ausführungsform, in der Temperaturerfassungseinheit 44 und Spannungskompensationseinheit 46 in einer einzigen Schaltung zusammengefasst sind. In diesem Fall ist dazu eine Halbleiterstrecke vorgesehen, hier als Diodenstrecke ausgeführt. Dabei wird dafür gesorgt, dass die Schaltung 44, 46 einen passenden Kompensations-Temperaturkoeffizienten aufweist und so die richtige Kompensationsspannung U_{Komp} bereitstellt. Ein typischer Wert für den Temperaturkoeffizienten eines Si-basierten PN-Übergangs liegt bei -2 mV/K, während insgesamt eine Größenordnung von 25 mV/K für ein Lawinenphotodiodenelement 24₁...24ₙ kompensiert werden soll. Daher wird eine entsprechende Anzahl von hier mindestens zwölf PN-Übergängen genutzt, wobei sich wegen der Reihenschaltung der Spannungsabfall und damit auch dessen Temperaturschwankung zur passenden Kompensationsspannung U_{Komp} summiert. Bei einem Spannungsabfall von etwa 0,55 V pro PN-Übergang resultiert insgesamt ein Spannungsabfall von etwa 6,6 V, der deutlich höher ist als bei der Lösung nach Figur 3 ähnlich einem Linearregler

Figur 5 zeigt eine alternative Ausführungsform mit Temperaturerfassungseinheit 44 und Spannungskompensationseinheit 46 in einem. Hier wird statt der Diodenstrecke ein Transistor und ein Spannungsteiler eingesetzt, so dass sich der Temperatureinfluss des Halbleiterübergangs entsprechend den Widerstandswerten des Spannungsteilers multipliziert statt summiert.

Eine wie in den Figuren 4 und 5 kombinierte Temperaturmess- und Spannungskompensationseinheit 44, 46 ist besonders einfach zu realisieren. Dafür sind die Verluste wegen des lösungsbedingten U_{Komp}-Spannungsabfalls höher, und dementsprechend muss eine höhere äußere Vorspannung U_{Bias} vorgehalten werden und es entsteht eine höhere Eigenerwärmung. Außerdem ergibt sich durch die Zusammenführung eine verfälschte Temperaturmessung und damit eine weniger genaue Temperaturkompensation der Vorspannung an den einzelnen Lawinenphotodiodenelemente 24₁...24ₙ.

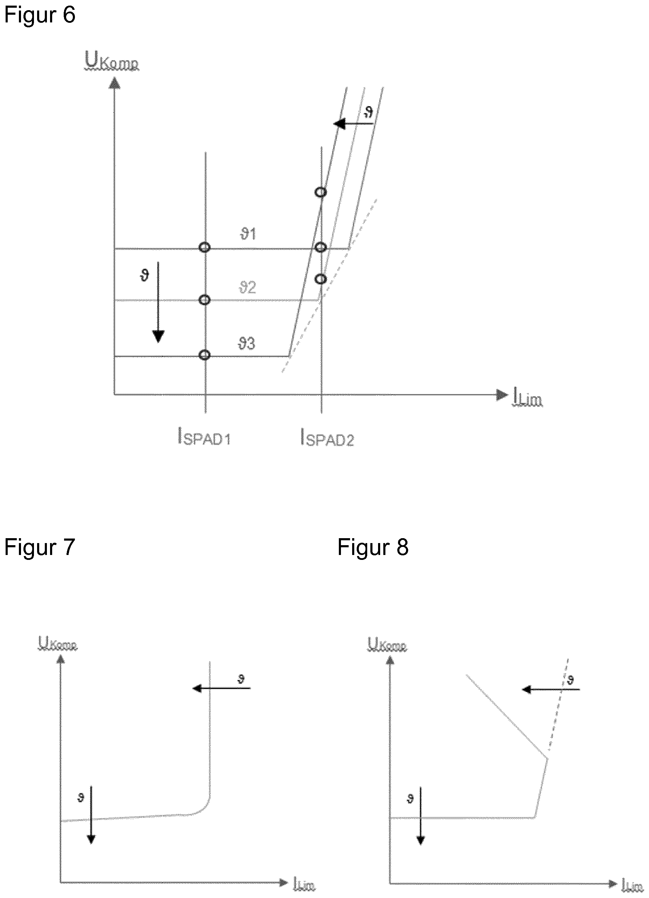

Figur 6 zeigt ein Kennlinienbild der Kompensationsspannung U_{Komp} in Abhängigkeit von Stromfluss und Temperatur, um mögliche Funktionsweisen der Spannungskompensationseinheit 46 noch weiter zu erläutern. Das betrifft insbesondere eine zusätzlich denkbare Strombegrenzungsfunktion der Spannungskompensationseinheit 46, die ebenfalls temperaturabhängig ausgelegt sein und dafür die vorhandene Temperaturmesseinheit 44 nutzen kann. Die Strombegrenzung kann prinzipiell auch unabhängig von der Kompensationseinheit 46 auf dem Lichtempfänger 22 integriert oder von außen erfolgen.

Die Strombegrenzung dient dem Schutz des Lichtempfängers 22 vor Überlast. Die Aktivität der Lawinenphotodiodenelemente 24₁...24ₙ und damit der Stromfluss hängt von dem Lichteinfall und dem Dunkelrauschen ab, wobei letzteres mit der Temperatur zunimmt. Es ist in vielen Fällen nicht möglich, den maximalen Fremdlichteintrag optomechanisch zu begrenzen. Bei zu viel Lichteinfall beziehungsweise hoher Betriebstemperatur kommt es somit zu einer positiven Rückkopplung, weil die zunehmende Verlustleistung das Dunkelrauschen noch verstärkt. Dann besteht die Gefahr der Zerstörung des Bauteils.

Außerdem steht bei zu viel Aktivität besonders der an sich nicht zu erfassenden Fremdlicht- oder Dunkelrauschereignisse ein Großteil der Lawinenphotodiodenelemente 24₁...24ₙ wegen der Totzeiten für die eigentliche Detektion nicht zur Verfügung. Eine Strombegrenzung durch Zurückfahren der Vorspannung beziehungsweise Überspannung stellt dann sicher, dass noch genügend Lawinenphotodiodenelemente 24₁...24ₙ verfügbar bleiben. Die Strombegrenzung verbessert deshalb auch das Signal-Rausch-Verhältnis. Das funktioniert auch bei einer geringen Anzahl von Lawinenphotodiodenelementen 24₁...24ₙ pro Fläche unter Fremdlicht, die in der Regel einen besseren Füllfaktor und somit eine höhere Detektivität im Grenzpegelbereich aufweisen.

In dem Kennlinienbild der Figur 6 entspricht der linke Bereich der Kompensation der Vorspannung, die anhand der Figuren 3 bis 5 erläutert wurde, und der rechte Bereich der Strombegrenzung oder Verlustleistungsbegrenzung. Den Übergang zwischen diesen Modi bildet jeweils eine Knickstelle mit temperaturabhängiger Lage. Das Kennlinienbild soll lediglich die prinzipielle Arbeitsweise und das Zusammenspiel von Temperaturkompensation und Strombegrenzung illustrieren. Die konkreten Kennlinienneigungen sowie die Lage der temperaturabhängigen Knick- oder Übergangsstellen sind nur beispielhaft. Insbesondere können die gewünschten Strombegrenzungswerte auch variabel sein, sei es durch externe Komponenten wie einen Widerstand oder auf digitale Weise etwa über ein Parameterregister des Lichtempfängers 22.

Der linke Teil des Kennlinienbildes entsprechend dem Kompensationsmodus soll bei einem ersten Wert I_{SPAD1} des Stromes diskutiert werden. Hier bleibt der Strom für alle Temperaturen unterhalb des Begrenzungsbereichs. Für alle Arbeitspunkte erfolgt die Temperaturkompensation von UBias mit einem typischen Temperatur- oder Kompensationskoeffizienten von etwa 20-30 mV/K. Entsprechend dem horizontalen Verlauf der Kennlinien einer idealen Spannungsquelle ist der Spannungsabfall von U_{Komp} vom Strom und damit auch dem einfallenden Licht unabhängig. Das ist auch in der Praxis zumindest annähernd erreichbar.

Es ist aber auch ein leicht ansteigender Verlauf der Kennlinien denkbar. Damit wird die Auslöseempfindlichkeit bei größeren Strömen, folglich stärkerem Lichteinfall, etwas herabgesetzt. Verringert man entsprechend dem ansteigenden Verlauf der Kennlinie die Vorspannung, so wird die Auslöseempfindlichkeit herabgesetzt. Dieser Effekt kann beispielsweise gezielt zur Steigerung des Dynamikbereichs genutzt werden. Technisch kann die Neigung sehr einfach durch Hinzuschalten eines einfachen Serienwiderstands in die Leitung für die Vorspannung U_{Bias} außerhalb der Spannungskompensationseinheit 46 erreicht werden. Das Ausmaß der Neigung hängt direkt vom Widerstandswert ab, der zwischen zwei Extremen wählbar ist: kein Serienwiderstand bei horizontalem Verlauf der Kennlinie entsprechend einer idealen Spannungsquelle und ein gegen unendlich laufender Serienwiderstand bei nahezu senkrechter Neigung entsprechend einer idealen Stromquelle. Allerdings ist eine große Neigung praktisch nicht nützlich, es kommt also tatsächlich nur ein niederohmiger Serienwiderstand in Betracht. In jedem Fall sollten für eine optimale Temperaturkompensation die Kennlinien parallel zueinander verlaufen und somit überall dem Temperaturgradienten der Lawinenphotodiodenelement 24₁...24ₙ entsprechen.

Der rechte Teil des Kennlinienbildes entsprechend dem Strombegrenzungsmodus beginnt je nach Temperatur bei unterschiedlichen Strömen an der jeweiligen Knickstelle der Kennlinien. Bei einem zweiten Wert I_{SPAD2} des Stromes befindet sich der Arbeitspunkt nur noch für die niedrigste Temperatur ϑ1 im regulären Kompensationsmodus. Für die höheren Temperaturen ϑ2 und ϑ3 haben sich die Arbeitspunkte hingegen schon in den Strombegrenzungsmodus verschoben.

Innerhalb des Strombegrenzungsmodus fallen die Kennlinien steil ab. Um im Beispiel von I_{SPAD2} und den höheren Temperaturen ϑ2 und ϑ3 zu bleiben, ist hier die Vorspannung schon deutlich reduziert. Das verringert die Auslöseempfindlichkeit der Lawinenphotodiodenelemente 24₁...24ₙ und damit den Strom, wobei sonst gleiche Bedingungen und insbesondere gleicher Lichteinfall unterstellt sind. Dieser Einfluss der Vorspannung auf den Strom gilt, solange es noch eine positive Überspannung gibt. Bei Erreichen oder Unterschreiten der Durchbruchspannung kommt der Stromfluss praktisch vollständig zum Erliegen.

Technisch wären auch zumindest nahezu senkrecht verlaufende Kennlinien entsprechend einer idealen Stromquelle möglich. Eine gewisse Neigung, die je nach Auslegung des Lichtempfängers 22 variiert werden kann, ist aber sogar vorteilhaft, weil sich dann ein Arbeitspunkt einstellen kann. Sonst würden schon geringste Änderungen im Strom, sei es durch Lichteinfall oder Rauschanteile, zu gewaltigen Änderungen der Vorspannung führen. Ein stabiler Arbeitspunkt im Begrenzungsbereich ist dann kaum noch möglich.

Die beschriebene Strombegrenzung ist aktiv. Das ermöglicht es, im Kompensationsmodus eine optimale, temperaturkompensierte Vorspannung anzulegen. Bei Überschreitung des temperaturabhängig festgelegten Grenzstroms oder anders ausgedrückt beim Übergang in den Strombegrenzungsmodus wird die Spannung zum Schutz vor zu hoher Verlustleistung reduziert, und es stellt sich ein dynamisches Gleichgewicht ein. Eine passive Strombegrenzung beispielsweise über einen Widerstand dagegen würde auch schon im normalen Arbeitsbereich bei gut vertragenen Strömen Spannungsänderungen an den Lawinenphotodiodenelementen 24₁...24ₙ bewirken. Damit wird die durch Temperaturkompensation gewünschte Stabilität nicht mehr optimal erreicht. Neben den Auswirkungen auf die Auslösewahrscheinlichkeit und Verstärkung ist bei Lawinenphotodiodenelementen 24₁...24ₙ mit expliziter Driftzone für die Rot-Empfindlichkeit auch eine Veränderung der spektralen Empfindlichkeit denkbar.

Die Figuren 7 und 8 zeigen noch zwei Variationen der in Figur 6 dargestellten Kennlinien, um den beispielhaften Charakter zu unterstreichen. Der Übersichtlichkeit halber ist jeweils nur noch eine Kennlinie für eine Temperatur dargestellt. Die temperaturabhängigen Kennlinienverschiebungen sind analog.

Die Kennlinie in Figur 7 zeigt im linken Teil eine leicht ansteigende Neigung. Das bedeutet wie schon erläutert, dass mit zunehmender Aktivität des Lichtempfängers 22 die Empfindlichkeit leicht absinkt. Im rechten Teil verläuft die Kennlinie senkrecht, begrenzt also den Strom abrupt. Um das aufzufangen, ist der Übergangsbereich kein scharfer Knick, sondern eine weiche Rundung. Hier mischen sich also die Effekte der Temperaturkompensation und der Strombegrenzung.

Die Kennlinie in Figur 8 entspricht weitgehend der Figur 6, mit dem Unterschied, dass im rechten Bereich der Strombegrenzung noch ein weiterer Knick mit einer sich daran anschließenden rückläufigen Kennlinie anschließt. Die rückläufige Kennlinie dient dazu, die anfallende Verlustleistung über der Spannungskompensationseinheit 46 im Fehlerfall etwa eines Kurzschlusses oder eines niederohmig gewordenen Lawinenphotodiodenelements 24 zu begrenzen. Ansonsten könnte so viel Verlustleistung anfallen, dass der Lichtempfänger 22 stark überhitzt. Gelingt es aber, den Strom annähernd im gleichen Maße zu reduzieren, in dem die Spannung ansteigt, wird die anfallende Verlustleistung auch im Fehlerfall in unkritischen Bereichen gehalten. Der Knick, an den sich die rückläufige Kennlinie anschließt, liegt vorzugsweise unterhalb der Durchbruchspannung, um den Normalbetrieb nicht zu stören. Die Lage des Knicks kann auf einem festen Wert fest vorgegeben sein oder erneut in Abhängigkeit von der Temperatur variieren. Eine rückläufige Kennlinie wie in Figur 8 ist aber nur eine denkbare Maßnahme für diesen Fehlerfall. Beispielsweise könnte alternativ auch der Strom ab einer kritischen Grenztemperatur auf einen sehr kleinen Wert reduziert werden.

In beiden Fällen bleibt ein deutlich steilerer Verlauf im Strombegrenzungsmodus im Vergleich zum Kompensationsmodus erhalten, der sich in einer Knickstelle oder auch einem gerundeten Übergangsbereich äußert. Das ist ein Ausdruck dessen, dass es im Kompensationsmodus, der auf eine Temperaturkompensation zielt, keine oder allenfalls eine geringe Abhängigkeit vom Strom gibt, wohingegen im Strombegrenzungsmodus eine starke Abhängigkeit mit relativ scharfer Grenze erwünscht ist.

In den bisherigen Ausführungsformen werden sämtliche der Lawinenphotodiodenelemente 24₁...24ₙ an dieselbe Spannungsquelle angeschlossen und liegen damit auf derselben Vorspannung. Es kann aber vorteilhaft sein, die der Lawinenphotodiodenelemente 24₁...24ₙ zu mehreren Gruppen zu verschalten und jeweils unterschiedlich vorzuspannen. Dadurch entstehen Bereiche unterschiedlicher Empfindlichkeit, weil die Auslösewahrscheinlichkeit und die Verstärkung mit der Vorspannung variiert. Auf die konkrete technische Umsetzung und detaillierte Anwendungsmöglichkeiten soll hier nicht näher eingegangen werden.

Jedenfalls ist auch bei solch einer heterogenen Vorspannung eine gemeinsame Temperaturkompensation möglich. Dazu wird beispielsweise die Spannungskompensationseinheit 46 in einem gemeinsam wirkenden Pfad beispielsweise direkt an dem anodenseitigen Anschluss 42 angeordnet, während die Versorgung der einzelnen Gruppen von Lawinenphotodiodenelementen 24₁...24ₙ mit der jeweiligen Vorspannung kathodenseitig erfolgt. Dabei ist eine korrekte Temperaturkompensation weiterhin gewährleitet, weil alle Gruppen auf demselben Chip sitzen wie die Spannungskompensationseinheit 46 und die eigentliche temperaturabhängige Komponente die Durchbruchspannung darstellt, die wiederum intern temperaturkompensiert ist. Weiterhin ist die Vorspannung die Summe aus Durchbruchspannung und Überspannung, und der für die Gruppen der Lawinenphotodiodenelemente 24₁...24ₙ arbeitspunktbestimmende Anteil der Vorspannung ist deshalb nur noch durch die Überspannung definiert.

## Patentansprüche

1. Lichtempfänger (22) mit einer Vielzahl von Lawinenphotodiodenelementen (24) und mit einem ersten Anschluss (40) und einem zweiten Anschluss (42) zum Anlegen einer Vorspannung, so dass die Lawinenphotodiodenelemente (24) jeweils mit einer Vorspannung oberhalb einer Durchbruchspannung vorspannbar und somit in einem Geiger-Modus betreibbar sind, wobei der Lichtempfänger (22) mindestens ein Temperaturerfassungselement (44) zur Erfassung einer Betriebstemperatur der Lawinenphotodiodenelemente (24) und eine Spannungskompensationseinheit (46) aufweist, um die Vorspannung an die Betriebstemperatur anzupassen
**dadurch gekennzeichnet,**
**dass** als Temperaturerfassungselement (44) mindestens eines der Lawinenphotodiodenelemente (24) genutzt ist und dass die Spannungskompensationseinheit (46) dafür ausgebildet ist, die Vorspannung entsprechend einer temperaturabhängigen Spannungsinformation des als Temperaturerfassungselement (44) genutzten Lawinenphotodiodenelements (24) nachzuführen.

2. Lichtempfänger (22) nach Anspruch 1,
wobei die Spannungskompensationseinheit (46) dafür ausgebildet ist, eine an den Lichtempfänger (22) angelegte Vorspannung in Abhängigkeit von der Betriebstemperatur zu verändern.

3. Lichtempfänger (22) nach Anspruch 1 oder 2,
wobei die Spannungskompensationseinheit (46) spannungsabziehend ausgebildet ist.

4. Lichtempfänger (22) nach einem der vorhergehenden Ansprüche,
wobei das Temperaturerfassungselement (44) auf dem Lichtempfänger (22) integriert ist.

5. Lichtempfänger (22) nach einem der vorhergehenden Ansprüche,
wobei Temperaturerfassungselement (44) und Spannungskompensationseinheit (46) als gemeinsames Schaltelement (44, 46) ausgebildet sind.

6. Lichtempfänger (22) nach Anspruch 5,
wobei das gemeinsame Schaltelement (44, 46) mindestens eine Halbleiterstrecke aufweist.

7. Lichtempfänger (22) nach einem der vorhergehenden Ansprüche,
wobei das Temperaturerfassungselement (44) dafür ausgebildet ist, die Betriebstemperatur an mehreren Positionen auf dem Lichtempfänger (22) zu messen.

8. Lichtempfänger (22) nach Anspruch 7,
wobei die Spannungskompensationseinheit (46) die Vorspannung entsprechend einer über die mehreren Positionen gemittelten Betriebstemperatur anpasst.

9. Lichtempfänger (22) nach Anspruch 7 oder 8,
wobei die Spannungskompensationseinheit (46) mehrkanalig ausgebildet ist, um die Vorspannung für verschiedene Gruppen von Lawinenphotodiodenelementen (24) entsprechend einer lokal unterschiedlichen gemessenen Betriebstemperatur anzupassen.

10. Lichtempfänger (22) nach einem der vorhergehenden Ansprüche,
der eine aktive Strombegrenzungseinheit (46) aufweist, die bei Überschreiten einer Stromschwelle des in dem Lichtempfänger (22) fließenden Stroms die Vorspannung absenkt.

11. Lichtempfänger (22) nach Anspruch 10,
wobei die Spannungskompensationseinheit (46) auch als Strombegrenzungseinheit fungiert und insbesondere die Stromschwelle an die Betriebstemperatur anpasst.

12. Optoelektronischer Sensor (10) mit mindestens einem Lichtempfänger (22) nach einem der vorhergehenden Ansprüche, wobei der Sensor (10) zur Entfernungsmessung nach einem Lichtlaufzeitverfahren und/oder als Codeleser und/oder zur Datenübertragung ausgebildet ist.

13. Verfahren zur Temperaturkompensation in einem Lichtempfänger (22) mit einer Vielzahl von Lawinenphotodiodenelementen (24), wobei an den Lichtempfänger (22) eine Vorspannung angelegt wird, so dass die Lawinenphotodiodenelemente (24) jeweils mit einer Vorspannung oberhalb einer Durchbruchspannung vorgespannt und somit in einem Geiger-Modus betrieben sind, wobei eine Betriebstemperatur der Lawinenphotodiodenelemente (24) erfasst wird und der Lichtempfänger (22) die Vorspannung an die Betriebstemperatur anpasst,
**dadurch gekennzeichnet,**
**dass** die Betriebstemperatur als eine temperaturabhängige Spannungsinformation von mindestens einem der Lawinenphotodiodenelemente (24) gemessen wird und dass die Vorspannung entsprechend der Spannungsinformation nachgeführt wird.

## Claims

1. A light receiver (22) having a plurality of avalanche photodiode elements (24) and having a first terminal (40) and a second terminal (42) for supplying a bias voltage so that the avalanche photodiode elements (24) can be biased with a bias voltage above a breakdown voltage and thus can be operated in a Geiger mode, wherein the light receiver (22) comprises at least one temperature measuring element (44) for detecting an operating temperature of the avalanche photodiode elements (24) and a voltage compensation unit (46) for adapting the bias voltage to the operating temperature,
**characterized in that** at least one of the avalanche photodiode elements (24) is used as temperature measuring element (44) and **in that** the voltage compensation unit (46) is configured to adapt the bias voltage in accordance with a voltage change detected by the avalanche photodiode element (24) used as temperature measuring element (44).

2. The light receiver (22) according to claim 1,
wherein the voltage compensation unit (46) is configured to adapt a bias voltage supplying the light receiver (22) in dependence on the operating temperature.

3. The light receiver (22) according to claim 1 or 2,
wherein the voltage compensation unit (46) is configured for voltage subtraction.

4. The light receiver (22) according to any of the preceding claims,
wherein the temperature measuring element (44) is integrated on the light receiver (22).

5. The light receiver (22) according to any of the preceding claims,
wherein the temperature measuring element (44) and the voltage compensation unit (46) are configured as a common circuit component (44, 46).

6. The light receiver (22) according to claim 5,
wherein the common circuit component (44, 46) comprises at least one semiconductor series.

7. The light receiver (22) according to any of the preceding claims,
wherein the temperature measuring unit (44) is configured to measure the operating temperature at a plurality of positions on the light receiver (22).

8. The light receiver (22) according to claim 7,
wherein the voltage compensation unit (46) is configured to adapt the bias voltage in accordance with an operating temperature averaged over the plurality of positions.

9. The light receiver (22) according to claim 7 or 8,
wherein the voltage compensation unit (46) is configured as a multi-channel unit for individually adapting the bias voltage for different groups of avalanche photodiode elements (24) in accordance with different measured operating temperatures.

10. The light receiver (22) according to any of the preceding claims,
having an active current limiting unit (46) for decreasing the current flowing in the light receiver (22) when a current threshold is exceeded.

11. The light receiver (22) according to claim 10,
wherein the voltage compensation unit (46) is also configured as the current limiting unit and in particular adapts the current threshold to the operating temperature.

12. An optoelectronic sensor (10) having at least one light receiver (22) according to any of the preceding claims, wherein the sensor (10) is configured for measuring distances according to a time of flight method and/or as a code reader and/or for data transmission.

13. A method for temperature compensation in a light receiver (22) having a plurality of avalanche photodiode elements (24), wherein a bias voltage is supplied to the light receiver (22) so that the avalanche photodiode elements (24) are biased with a bias voltage above a breakdown voltage and thus operated in a Geiger mode, wherein an operating temperature of the avalanche photodiode elements (24) is measured and the light receiver (22) adapts the bias voltage to the operating temperature,
**characterized in that** the operating temperature is measured as a temperture-dependent voltage information by at least one of the avalanche photodiode elements (24) and **in that** the bias voltage is controlled in accordance with the voltage information.

## Revendications

1. Récepteur de lumière (22) comportant une multitude d'éléments formant photodiodes à avalanche (24) et une première borne (40) et une seconde borne (42) pour appliquer une tension de polarisation, de sorte que les éléments formant photodiodes à avalanche (24) sont susceptibles d'être polarisés chacun avec une tension de polarisation supérieure à une tension de claquage et peuvent donc fonctionner en mode Geiger, le récepteur de lumière (22) comprenant au moins un élément de détection de température (44) pour détecter une température de fonctionnement des éléments formant photodiodes à avalanche (24) et une unité de compensation de tension (46) pour adapter la tension de polarisation à la température de fonctionnement,
**caractérisé en ce que**
l'un au moins des éléments formant photodiodes à avalanche (24) est utilisé en tant qu'élément de détection de température (44), et **en ce que** l'unité de compensation de tension (46) est réalisée pour asservir la tension de polarisation en correspondance d'une information de tension, dépendante de la température, de l'élément formant photodiode à avalanche (24) utilisé en tant qu'élément de détection de température (44).

2. Récepteur de lumière (22) selon la revendication 1,
dans lequel l'unité de compensation de tension (46) est réalisée pour modifier une tension de polarisation appliquée au récepteur de lumière (22) en fonction de la température de fonctionnement.

3. Récepteur de lumière (22) selon la revendication 1 ou 2,
dans lequel l'unité de compensation de tension (46) est réalisée de manière à soustraire la tension.

4. Récepteur de lumière (22) selon l'une des revendications précédentes, dans lequel l'élément de détection de température (44) est intégré sur le récepteur de lumière (22).

5. Récepteur de lumière (22) selon l'une des revendications précédentes, dans lequel l'élément de détection de température (44) et l'unité de compensation de tension (46) sont réalisés sous la forme d'un élément de commutation (44, 46) commun.

6. Récepteur de lumière (22) selon la revendication 5,
dans lequel l'élément de commutation (44, 46) commun comprend au moins une section semi-conductrice.

7. Récepteur de lumière (22) selon l'une des revendications précédentes, dans lequel l'élément de détection de température (44) est réalisé pour mesurer la température de fonctionnement dans une pluralité de positions sur le récepteur de lumière (22).

8. Récepteur de lumière (22) selon la revendication 7,
dans lequel l'unité de compensation de tension (46) adapte la tension de polarisation en correspondance d'une température de fonctionnement moyennée sur la pluralité de positions.

9. Récepteur de lumière (22) selon la revendication 7 ou 8,
dans lequel l'unité de compensation de tension (46) est réalisée avec plusieurs canaux pour adapter la tension de polarisation pour différents groupes d'éléments formant photodiodes à avalanche (24) en correspondance d'une température de fonctionnement mesurée localement différente.

10. Récepteur de lumière (22) selon l'une des revendications précédentes, comprenant une unité de limitation de courant (46) active qui, lors du dépassement d'un seuil du courant circulant dans le récepteur de lumière (22), baisse la tension de polarisation.

11. Récepteur de lumière (22) selon la revendication 10,
dans lequel l'unité de compensation de tension (46) fait également office d'unité de limitation de courant et adapte en particulier le seuil de courant à la température de fonctionnement.

12. Capteur optoélectronique (10) comportant au moins un récepteur de lumière (22) selon l'une des revendications précédentes,
dans lequel le capteur (10) est réalisé pour mesurer la distance selon une méthode de temps de parcours de lumière et/ou sous forme de lecteur de code et/ou pour la transmission de données.

13. Procédé pour la compensation de température dans un récepteur de lumière (22) comportant une multitude d'éléments formant photodiodes à avalanche (24), une tension de polarisation étant appliquée au récepteur de lumière (22), de sorte que les éléments formant photodiodes à avalanche (24) sont polarisés chacun avec une tension de polarisation supérieure à une tension de claquage et fonctionnent donc en mode Geiger, dans lequel une température de fonctionnement des éléments formant photodiodes à avalanche (24) est détectée et le récepteur de lumière (22) adapte la tension de polarisation à la température de fonctionnement,
**caractérisé en ce que**
la température de fonctionnement est mesurée comme une information de tension, dépendante de la température, de l'un au moins des éléments formant photodiodes à avalanche (24), et **en ce que** la tension de polarisation est asservie en correspondance de l'information de tension.
